(19) Europäisches Patentamt
European Patent Office
Office européen des brevets

(11) **EP 4 775 647 A1**

(12) **EUROPEAN PATENT APPLICATION**
published in accordance with Art. 153(4) EPC

(43) Date of publication:
**15.07.2026 Bulletin 2026/29**

(21) Application number: **24897053.5**

(22) Date of filing: **24.09.2024**

(51) International Patent Classification (IPC):
**C10B 57/04** (2006.01)   **C10B 53/02** (2006.01)

(52) Cooperative Patent Classification (CPC):
**C10B 53/02; C10B 57/04;** Y02E 50/10

(86) International application number:
**PCT/JP2024/034003**

(87) International publication number:
**WO 2025/115363 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.11.2023 JP 2023202186**

(71) Applicant: **JFE Steel Corporation
Tokyo 100-0011 (JP)**

(72) Inventors:
• **KAWAI, Yuya
Tokyo 100-0011 (JP)**
• **DOHI, Yusuke
Tokyo 100-0011 (JP)**
• **MATSUI, Takashi
Tokyo 100-0011 (JP)**

(74) Representative: **Hoffmann Eitle
Patent- und Rechtsanwälte PartmbB
Arabellastraße 30
81925 München (DE)**

(54) **COKE PRODUCTION METHOD**

(57)    Provided is a method of producing coke that does not require any operations posing a risk of ignition and that is capable of producing high-strength coke even when using biomass-derived raw materials. A method of producing coke by charging blended coal into a coke oven and carbonizing the blended coal includes preparing the blended coal by blending 1 mass% or more and 10 mass% or less of a carbonaceous material B, which is obtained by heat treating biomass having a ratio of particles with a particle size of 125 μm or less of 50 mass% or more, with a carbonaceous material A, which has a ratio of particles with a particle size of 3 mm or more of 10 mass% or more and 30 mass% or less, and a ratio of particles with a particle size of 0.5 mm or more of 60 mass% or more.

*FIG. 2*

**Description**

TECHNICAL FIELD

The present disclosure relates to a method of producing coke and more particularly to a method of producing coke that can produce high-strength coke when producing coke using biomass raw material.

BACKGROUND

Blast furnace coke is used in blast furnaces as a reducing agent, a heat source, and a support material to maintain gas permeability and liquid permeability. To ensure stable operation of a blast furnace, it is necessary to ensure good gas permeability and liquid permeability within the blast furnace, which requires coke with excellent properties such as strength and particle size. Among these, coke strength such as tumble strength is particularly important.

In recent years, there has been a growing need to reduce $CO_2$ emissions, and in fields where coal and petroleum have been used as raw materials, studies are underway to replace these raw materials with carbon-neutral materials such as biomass. In the steel industry as well, demand exists for using biomass-derived raw materials as raw materials for the coke used in blast furnaces.

Lump coke used in blast furnaces is produced by carbonizing coal in a carbonization furnace, during which the coal softens, melts, and bonds together. Therefore, coking coal having excellent softening and melting properties is used to produce high-strength coke. On the other hand, biomass-derived raw materials do not soften and melt like coal, and thus, when they are used in conventional processes for producing coke from coal, the resulting coke has low strength and many defects. Therefore, when biomass-derived raw materials are used, it is necessary to devise ways to prevent a decrease in coke strength.

When coke is produced by charging blended coal into a coke oven and carbonizing, it is generally known that the coke strength improves as the bulk density of the charged blended coal increases (see, for example, Non-patent Literature (NPL) 1). Therefore, various methods for improving the bulk density of the blended coal charged into the coke oven have been investigated.

As a method of improving the bulk density of coal charged by gravity, for example, NPL 2 describes a method of improving the bulk density of coal based on a preheated coal charging method in which coal is preheated and dried at a high temperature of about 200 °C before being charged.

Furthermore, PTL 1 and 2 describe methods of improving the bulk density of coal by adding a bulk density enhancing agent to blended coal.

CITATION LIST

Patent Literature

PTL 1: JP 2010-77332 A
PTL 2: JP 2013-107930 A

Non-patent Literature

NPL 1: Handbook of Iron and Steel, 3rd Edition, Vol. II, p. 170
NPL 2: Handbook of Iron and Steel, 5th Edition, Vol. 1, p. 107

SUMMARY

(Technical Problem)

As mentioned above, when biomass-derived raw materials are used in coke production, it is necessary to devise ways to suppress a decrease in coke strength. If the bulk density of blended coal containing biomass-derived raw materials can be increased at the time of charging into a coke oven, it is thought that high-strength coke can be produced even when biomass-derived raw materials are used. However, all of the above-mentioned conventional methods of improving the bulk density of blended coal to be charged into a coke oven are problematic.

In the method based on the preheated coal charging method described in NPL 2, coal is preheated and dried at a high temperature of about 200 °C before being charged, and a nitrogen atmosphere is thus required to prevent ignition and oxidation of the coal. Therefore, additional equipment is required to maintain the nitrogen atmosphere. Moreover, if the nitrogen atmosphere is not maintained, there is a risk of explosion or ignition due to the high temperature and low moisture content of the coal.

Furthermore, in the methods described in PTL 1 and 2, an additive that is generally known to be effective in improving flowability is used to achieve an improvement in bulk density. However, in addition to biomass-derived raw materials, raw materials other than those used in ordinary coke production are added, which may reduce coke quality, such as coke strength, and also poses the problem of increased costs due to the addition of expensive chemicals.

The present disclosure has been made in view of the aforementioned problems, and an aim thereof is to provide a method of producing coke that does not require any operations posing a risk of ignition and that is capable of producing high-strength coke even when using biomass-derived raw materials.

(Solution to Problem)

We have conducted extensive studies to solve the technical problem described above and have made the following discoveries. Specifically, we discovered that by blending pulverized carbonized biomass with carbonaceous material of a ground particle size used in ordinary coke production, the pulverized carbonized biomass acts as a lubricant between the carbonaceous material particles, improving the flowability of the carbonaceous material and increasing the bulk density of the blended coal when it is charged into a coke oven. Furthermore, we discovered that by increasing the bulk density of the blended coal when it was charged, it was possible, despite the blending of the biomass-derived raw materials, to obtain coke with greater strength than that obtained when no biomass-derived raw materials were blended.

The present disclosure is made based on these discoveries, and primary features are as described below.

[1] A method of producing coke by charging blended coal into a coke oven and carbonizing the blended coal, the method comprising:
preparing the blended coal by blending 1 mass% or more and 10 mass% or less of a carbonaceous material B, which is obtained by heat treating biomass having a ratio of particles with a particle size of 125 $\mu$m or less of 50 mass% or more, with a carbonaceous material A, which has a ratio of particles with a particle size of 3 mm or more of 10 mass% or more and 30 mass% or less, and a ratio of particles with a particle size of 0.5 mm or more of 60 mass% or more.
[2] The method of producing coke according to [1], wherein a volatile content of the carbonaceous material B is 2 mass% or more and 50 mass% or less.

(Advantageous Effect)

According to the present disclosure, a method of producing coke that does not require any operations posing a risk of ignition and that is capable of producing high-strength coke even when using biomass-derived raw materials can be provided.

BRIEF DESCRIPTION OF THE DRAWINGS

In the accompanying drawings:

FIG. 1 is a cross-sectional view schematically illustrating a bulk density measuring device used in a bulk density measurement test; and
FIG. 2 is a graph illustrating the relationship between the blending ratio of carbonaceous material B and the strength difference $\Delta$DI relative to a Conventional Example (No. 1) obtained by carbonizing only carbonaceous material A containing no carbonized biomass.

DETAILED DESCRIPTION

An embodiment of the present disclosure is described below with reference to the drawings. A method of producing coke according to the present disclosure is a method of producing coke by charging blended coal into a coke oven and carbonizing the blended coal, the method including preparing the blended coal by blending 1 mass% or more and 10 mass% or less of a carbonaceous material B, which is obtained by heat treating biomass having a ratio of particles with a particle size of 125 $\mu$m or less of 50 mass% or more, with a carbonaceous material A, which has a ratio of particles with a particle size of 3 mm or more of 10 mass% or more and 30 mass% or less, and a ratio of particles with a particle size of 0.5 mm or more of 60 mass% or more.

It is generally known that reducing the particle size of blended coal used in coke production reduces the bulk density of the blended coal charged into a coke oven. Hence, to increase bulk density, it is desirable to increase the particle size of the blended coal.

We considered that if the bulk density could be improved by appropriately controlling the particle size distribution of the blended coal charged into the coke oven, it would be possible to suppress the decrease in coke strength that is a concern when using biomass-derived raw materials. As a result of extensive research based on this idea, we discovered that by blending pulverized carbonized biomass with the blended coal used in ordinary coke production, the pulverized carbonized biomass acts as a bulk density enhancing agent, thereby improving the bulk density of the blended coal charged into the coke oven.

The method of producing coke of the present disclosure will be described in detail below.

The method of producing coke of the present disclosure is a technology for improving the bulk density of blended coal at the time of charging by blending a pulverized carbonaceous material (carbonaceous material B) with a blended coal (carbonaceous material A) used in ordinary coke production. Here, the blended coal (carbonaceous material A) used in ordinary coke production is mainly composed of carbonaceous materials such as coal, pitches, oil coke, and coal dry distillation products.

In the method of producing coke of the present disclosure, a blended coal is prepared by blending 1 mass% or more and 10 mass% or less of a carbonaceous material B having a ratio of particles with a particle size of 125 $\mu$m or less of 50 mass% or more with a carbonaceous material A having a ratio of particles with a particle size of 3 mm or more of 10 mass% or more and 30 mass% or less, and a ratio of particles with a particle size of 0.5 mm or more of 60 mass% or more.

The carbonaceous material A, which has a ratio of particles with a particle size of 3 mm or more of 10 mass% or more and 30 mass% or less, and a ratio of particles with a particle size of 0.5 mm or more of 60 mass% or more, is a carbonaceous material with a particle size used in ordinary coke production. It is known that reducing the particle size of blended coal reduces the bulk density of the blended coal charged into a coke oven. Therefore, in the present disclosure, the ground particle size of the carbonaceous material A, which accounts for the majority of the blended coal, is controlled so that the ratio of particles of 3 mm or more is 10 mass% or more and 30 mass% or less.

If the particle size of the carbonaceous material A is large, a distribution of properties occurs in coke production that uses a mixture of various components with different properties, such as coal. Therefore, the particle size of the carbonaceous material A is controlled so that the ratio of particles of 3 mm or more is 30 mass% or less. On the other hand, if the particle size of the carbonaceous material A is low, the bulk density of the blended coal decreases when it is charged, as conventionally known. Therefore, the particle size of the carbonaceous material A is controlled so that the ratio of particles with a particle size of 3 mm or more is 10 mass% or more. The ratio of particles of the carbonaceous material A having a particle size of 3 mm or more is preferably 15 mass% or more. This ratio is preferably 25 mass% or less. No particular upper limit is placed on the particle size of the carbonaceous material A as long as the ratio of particles having a particle size of 3 mm or more is 30 mass% or less, but from the perspective of preventing imbalance of components, the upper limit is preferably 25 mm or less.

Furthermore, for the carbonaceous material A having a particle size of less than 3 mm as well, if the particle size were to become excessively small, then the bulk density of the blended coal would decrease and the difference in particle size with the carbonaceous material B would become small. In this case, the bulk density improving effect of the present disclosure could not be obtained. Therefore, in the present disclosure, the ratio of particles of the carbonaceous material A having a particle size of 0.5 mm or more is set to 60 mass% or more. That is, the ratio of particles having a particle size of 0.5 mm or more and less than 3 mm is set to 30 mass% or more and 90 mass% or less. In addition, the ratio of particles of the carbonaceous material A having a particle size of 0.5 mm or more is preferably 80 mass% or less. Furthermore, the ratio of fine particles with a particle size of less than 0.5 mm in the carbonaceous material A is less than 40 mass% and is preferably less than 20 mass%. If a large amount of fine particles of less than 0.5 mm are produced during grinding, the fine particles may be removed by sieving or the like.

On the other hand, the carbonaceous material B, in which the ratio of particles having a particle size of 125 $\mu$m or less is 50 mass% or more, is a carbonaceous material obtained by heat treating biomass and is blended in a ratio of 1 mass% or more and 10 mass% or less with respect to the entire blended coal. In the present disclosure, the effect of improving the bulk density can be obtained by blending the carbonaceous material B having an extremely small particle size with the carbonaceous material A. Specifically, when the blended coal is charged into a coke oven, the pulverized carbonaceous material B is mixed among the coarse carbonaceous material A, thereby functioning as a lubricant to improve the flowability of the blended coal and increasing the bulk density. Furthermore, the pulverized carbonaceous material B enters between coarse particles of the carbonaceous material A, thereby disrupting water-mediated interparticle bridging among carbonaceous particles in the blended coal, which also improves the flowability of the carbonaceous material. The blending ratio of the carbonaceous material B is preferably 1 mass% or more. The blending ratio is preferably 9 mass% or less. The blending ratio is more preferably 2 mass% or more. The blending ratio is more preferably 5 mass% or less.

Here, biomass is a generic term for a certain amount of accumulated plant and animal resources and waste derived from these resources (excluding fossil resources). The biomass used in the carbonaceous material B of the present disclosure includes any biomass that produces carbides when pyrolyzed, such as agricultural, forestry, livestock, fishery, and waste biomass.

In the present disclosure, the biomass used as the raw material for carbonized biomass preferably includes biomass that effectively generates a high amount of heat, such as woody biomass.

Examples of woody biomass include forestry-derived biomass including papermaking by-products such as pulp black liquor and chip dust, sawmill by-products such as bark and sawdust, forest residual material such as branches, leaves, tops, and short pieces of lumber, thinned timber such as cedar, cypress, and pine, material from specialty forest products such as waste logs from edible fungi cultivation, firewood and charcoal trees such as castanopsis, oak, and pine, and short-rotation forestry trees such as willow, poplar, eucalyptus, and pine. Further examples of woody biomass include general waste such as pruned branches from municipal roadside trees and garden trees of private homes, pruned branches from national or prefectural roadside trees and garden trees of businesses, and industrial waste such as construction and building waste. Some agricultural biomass such as rice husks, wheat straw, rice straw, sugarcane waste, and palm oil, which are classified as agricultural biomass and are generated from waste or by-products, and rice bran, rapeseed, soybeans, and the like that are generated from energy crops, can also be suitably used as woody biomass.

The volatile content of the carbonaceous material B is preferably 2 mass% or more. The volatile content is preferably 50 mass% or less. A volatile content exceeding 50 mass% is not desirable, as in this case the carbonization of the biomass does not progress, resulting in poor grindability and a decrease in productivity of the pulverized carbonaceous material B. On the other hand, if the volatile content is less than 2 mass%, the decrease in coke strength due to the addition of the carbonaceous material B is greater than when the volatile content is 2 mass% or more, and it may not be possible to increase the blending ratio of the carbonaceous material B. The volatile content of the carbonaceous material B is more preferably 4 mass% or more. The volatile content is more preferably 45 mass% or less. The volatile content is even more preferably 6 mass% or more. The volatile content is even more preferably 30 mass% or less.

The lower the volatile content of the carbonaceous material B, the greater the effect of improving the bulk density of the blended coal by blending the carbonaceous material B. The fact that the volatile content of carbonaceous material B is low means that the carbonization of biomass by heat treatment has progressed more, and the carbonaceous material B has become hydrophobic. It is thought that as the carbonaceous material B becomes more hydrophobic, the effect of disrupting water-mediated interparticle bridging in the blended coal becomes greater, thereby enhancing the effect of improving the flowability of the carbonaceous material.

In the present specification, the volatile content is a value measured in accordance with "Coal and coke - Methods for proximate analysis" (JIS M 8812:2004) specified according to the Japanese Industrial Standards (JIS).

The heat treatment of the biomass serving as the raw material for the carbonaceous material B is preferably carried out in an atmosphere in which the supply of oxygen is blocked. For example, the heat treatment may be carried out while the biomass serving as the raw material is accommodated in a container that forms a space where the inflow of air is prevented and an inert gas is allowed to flow (i.e., in a non-oxidizing atmosphere). The heat treatment of the biomass serving as the raw material can be carried out by heating a container accommodating biomass serving as the raw material and by heat transfer from the container.

Normally, the reaction rate of the pyrolysis reaction of biomass in the heat treatment is fast, and therefore the time required for completion of the pyrolysis reaction is short. The heat treatment time is therefore preferably 1 minute or longer. The heat treatment time is more preferably 10 minutes or longer. This eliminates a temperature difference between the biomass serving as the raw material and the container, allowing the entire biomass serving as the raw material to be uniformly heat treated. Further, it is possible to reliably raise the temperature of the entire carbonaceous raw material to the heat treatment temperature (that is, heat evenly) to carry out the heat treatment, and thus variation in the quality of the heat-treated carbonaceous material and the carbonaceous powder can be suppressed. No upper limit is placed on the heat treatment time, but if the heat treatment time is too long, the energy required for heat treatment increases, which leads to an undesired increase in costs. A heat treatment time of 60 min or shorter is usually sufficient. The heat treatment time is the length of time during which the temperature of the biomass serving as the raw material is maintained at a predetermined heat treatment temperature from the point in time at which the temperature of the biomass reaches this heat treatment temperature.

The heat treatment may be carried out using a heating apparatus such as a rotary kiln, a fluidized bed heating furnace, an electric furnace, a screw-type heating furnace, a shaft furnace, a carbonization furnace, or the like.

The method of adjusting the particle size of the carbonaceous material B is not particularly specified as long as a predetermined particle size is obtained, but in order to pulverize a large amount of carbonaceous material for use in coke production, equipment such as a roller mill or a tower mill can be used.

The moisture content of the blended coal in the present disclosure is preferably 6 mass% or more. The moisture content is preferably 9 mass% or less. If the moisture content of the blended coal is less than 6 mass%, drying of the blended coal increases the risk of ignition and may also lead to an increased amount of dust generation. On the other hand, a moisture content of the blended coal exceeding 9 mass% is not desirable, since the increase in water may reduce the effect of improving bulk density by blending the pulverized carbonaceous material B, and a large amount of heat would be required to evaporate water during carbonization in coke production.

EXAMPLES

Examples of the present disclosure are described below. The present disclosure is not limited to the following examples and can be modified as desired without departing from the scope of the present disclosure.

For the blended coal used in the bulk density measurement test, Table 1 lists the particle size of the carbonaceous material A, the particle size and blending ratio of the carbonaceous material B, and the moisture content of the blended coal.

[Table 1]

Table 1

| Level | Blended coal | | | | | | | Moisture (mass%) | Bulk density [kg/m³] (d.b.) | Classification |
| | Carbonaceous material A | | | Carbonaceous material B | | | | | | |
| | Type | Ratio of 3 mm or more (mass%) | Ratio of 0.5 mm or more (mass%) | Type | Volatile content (mass%) | Ratio of 125 μm or less (mass%) | Blending ratio in blended coal (mass%) | | | |
|---|---|---|---|---|---|---|---|---|---|---|
| 1 | Blended coal | 29 | 69 | - | - | - | 0 | 7 | 783 | Conventional Example |
| 2 | Blended coal | 23 | 66 | - | - | - | 0 | 7 | 780 | Conventional Example |
| 3 | Blended coal | 20 | 65 | - | - | - | 0 | 7 | 775 | Conventional Example |
| 4 | Blended coal | 15 | 63 | - | - | - | 0 | 7 | 768 | Conventional Example |
| 5 | Blended coal | 12 | 61 | - | - | - | 0 | 7 | 762 | Conventional Example |
| 6 | Blended coal | 29 | 69 | Cedar heat-treated at 500 °C | 22.7 | 100 | 3 | 7 | 818 | Example |
| 7 | Blended coal | 23 | 66 | Cedar heat-treated at 500 °C | 22.7 | 100 | 3 | 7 | 813 | Example |
| 8 | Blended coal | 20 | 65 | Cedar heat-treated at 300 °C | 37.2 | 100 | 2 | 7 | 798 | Example |
| 9 | Blended coal | 20 | 65 | Cedar heat-treated at 500 °C | 22.7 | 100 | 1 | 7 | 792 | Example |
| 10 | Blended coal | 20 | 65 | Cedar heat-treated at 500 °C | 22.7 | 100 | 2 | 7 | 804 | Example |

| Level | Blended coal | | | | | | | Moisture (mass%) | Bulk density [kg/m³] (d.b.) | Classification |
|---|---|---|---|---|---|---|---|---|---|---|
| | Carbonaceous material A | | | Carbonaceous material B | | | | | | |
| | Type | Ratio of 3 mm or more (mass%) | Ratio of 0.5 mm or more (mass%) | Type | Volatile content (mass%) | Ratio of 125 μm or less (mass%) | Blending ratio in blended coal (mass%) | | | |
| 11 | Blended coal | 20 | 65 | Cedar heat-treated at 500 °C | 22.7 | 100 | 3 | 7 | 812 | Example |
| 12 | Blended coal | 20 | 65 | Cedar heat-treated at 500 °C | 22.7 | 90 | 3 | 7 | 811 | Example |
| 13 | Blended coal | 20 | 65 | Cedar heat-treated at 500 °C | 22.7 | 77 | 3 | 7 | 807 | Example |
| 14 | Blended coal | 20 | 65 | Cedar heat-treated at 500 °C | 22.7 | 55 | 3 | 7 | 805 | Example |
| 15 | Blended coal | 20 | 65 | Cedar heat-treated at 500 °C | 22.7 | 100 | 5 | 7 | 796 | Example |
| 16 | Blended coal | 20 | 65 | Cedar heat-treated at 500 °C | 22.7 | 100 | 9 | 7 | 786 | Example |
| 17 | Blended coal | 20 | 65 | Cedar heat-treated at 700 °C | 7.4 | 100 | 2 | 7 | 806 | Example |
| 18 | Blended coal | 20 | 65 | Cedar heat-treated at 800 °C | 4.3 | 100 | 2 | 7 | 807 | Example |
| 19 | Blended coal | 20 | 65 | Cedar heat-treated at 900 °C | 1.2 | 100 | 2 | 7 | 810 | Example |

| Level | Blended coal | | | | | | | Moisture (mass%) | Bulk density [kg/m³] (d.b.) | Classification |
|---|---|---|---|---|---|---|---|---|---|---|
| | Carbonaceous material A | | | Carbonaceous material B | | | | | | |
| | Type | Ratio of 3 mm or more (mass%) | Ratio of 0.5 mm or more (mass%) | Type | Volatile content (mass%) | Ratio of 125 μm or less (mass%) | Blending ratio in blended coal (mass%) | | | |
| 20 | Blended coal | 20 | 65 | PKS heat-treated at 300 °C | 44.7 | 90 | 2 | 7 | 794 | Example |
| 21 | Blended coal | 20 | 65 | PKS heat-treated at 500 °C | 19.8 | 90 | 2 | 7 | 800 | Example |
| 22 | Blended coal | 20 | 65 | PKS heat-treated at 700 °C | 6.1 | 90 | 2 | 7 | 808 | Example |
| 23 | Blended coal | 20 | 65 | PKS heat-treated at 850 °C | 2.8 | 90 | 2 | 7 | 809 | Example |
| 24 | Blended coal | 20 | 65 | PKS heat-treated at 900 °C | 1.4 | 90 | 2 | 7 | 812 | Example |
| 25 | Blended coal | 15 | 63 | Cedar heat-treated at 500 °C | 22.7 | 100 | 3 | 7 | 806 | Example |
| 26 | Blended coal | 12 | 61 | Cedar heat-treated at 500 °C | 22.7 | 100 | 3 | 7 | 799 | Example |
| 27 | Blended coal | 20 | 65 | Cedar heat-treated at 500 °C | 22.7 | 100 | 11 | 7 | 773 | Comparative Example |

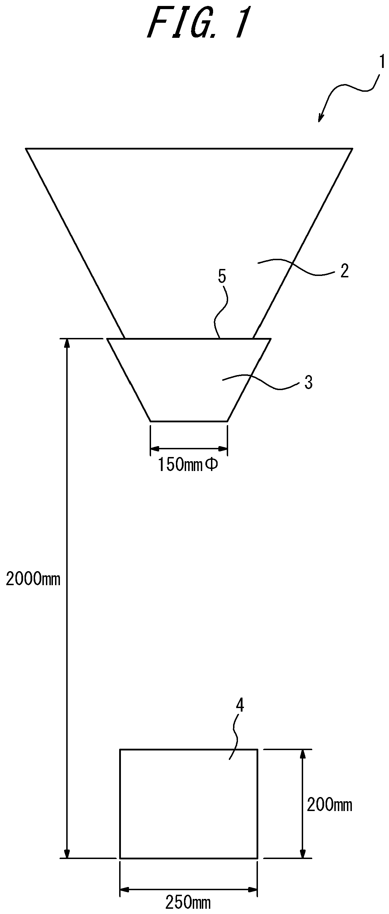

FIG. 1 is a cross-sectional view schematically illustrating a bulk density measuring device used in a bulk density measurement test. As illustrated in FIG. 1, a bulk density measuring device 1 includes a sample hopper 2, a guide 3 installed below the sample hopper, and a box-shaped container 4. The guide 3 has an inlet diameter of 300 mm and an outlet diameter of 150 mm. The container 4 is a rectangular box-shaped container having a width of 250 mm, a length of 250 mm (depth direction in FIG. 1), and a height of 200 mm, and having an opening only on the top surface. A slide gate 5 is installed at the bottom of the sample hopper 2, and by opening the slide gate 5, the blended coal in the hopper 2 falls into the container 4 via the guide 3. The height from the slide gate 5 installed at the bottom of the hopper 2 to the bottom of the container 4 is 2 m.

In these Examples, the bulk densities of the various blended coals listed in Table 1 were measured using the above-described bulk density measuring device. The procedure for measuring bulk density is described below.

First, carbonaceous material A and carbonaceous material B, each adjusted to the particle sizes listed in Table 1, were blended, water was added to the mixture to obtain the moisture content listed in Table 1, and the result was mixed to yield blended coal. Next, 32 kg of the blended coal was filled into the hopper 2, and the slide gate 5 was subsequently opened to drop the blended coal into the container 4. Next, the blended coal protruding from the top of the container 4 after the blended coal had fallen was removed, and the mass of the blended coal filled in the container was measured. Subsequently, the weighed blended coal was divided into portions to measure the moisture content, and the bulk density (dry basis, d.b.) of the blended coal was calculated using the following Equation (1). The measurement of the coal bulk density was carried out twice for each level, and the average value of the two measurements was used as the bulk density for each level.

[Math. 1]

$$\text{bulk density } [\text{kg/m}^3](\text{d.b.})$$
$$= \frac{\text{mass of blended coal in container } [\text{kg}] \times \dfrac{100 - \text{moisture content of blended coal } [\text{mass\%}]}{100}}{0.25 \times 0.25 \times 0.20}$$

$$(1)$$

Table 1 lists the measurement results of the bulk density of each blended coal. In Levels 1 to 5, which are Conventional Examples that do not contain the pulverized carbonaceous material B, the bulk density decreases as the mass ratio of particles less than 3 mm increases, and as is conventionally known, the bulk density decreases as the ground particle size decreases. On the other hand, in Levels 6 to 26, which are Examples in which the pulverized carbonaceous material B is blended with the carbonaceous material A, it is clear that the bulk density is improved compared to the Conventional Examples in which the carbonaceous material B is not blended. Furthermore, in Level 27, which is a Comparative Example in which the blending ratio of the carbonaceous material B exceeds 10 mass%, the bulk density is lower than that of the Conventional Example (Level 3) in which the Carbonaceous Material B is not blended. From the above results, it was confirmed that by blending pulverized carbonized biomass in a ratio of 1 mass% or more and 10 mass% or less with blended coal used in ordinary coke production, the pulverized carbonized biomass acts as a bulk density enhancing agent, making it possible to increase the bulk density of the blended coal at the time of charging.

Next, a carbonization test was conducted to examine the impact, on coke strength, of the bulk density improvement effect of blending pulverized carbonized biomass. Carbonaceous material A, which was blended coal having an average maximum vitrinite reflectance (Ro(-)) of 1.0 [%] and a common logarithmic value (log MF) of the maximum fluidity (MF [ddpm]) measured by a Gieseler Plastometer of 2.50, was blended with carbonaceous material B, which was pulverized carbonized biomass, to produce coke in the following manner, and the coke strength was evaluated.

Blended coal for carbonization was prepared by blending, at the blending ratios listed in Table 2, blended coal A and carbonaceous material B prepared to have the particle sizes listed in Table 2, and then adding water and mixing to obtain a moisture content of 7 %. This blended coal was charged into a carbonization container in an amount of 16.5 kg at the bulk density listed in Table 2 and carbonized in an electric furnace. After carbonization at a furnace wall temperature of 1050 °C for 6 hours, the result was cooled in a nitrogen atmosphere, and the drum strength of the obtained coke was measured. The drum strength index DI_150/15 was measured in accordance with the tumble strength test method of JIS K2151. The difference in strength relative to a Conventional Example (No. 1) obtained by carbonizing only the carbonaceous material A, which does not contain carbonized biomass, is listed in Table 2 as ΔDI (ΔDI = [DI_150/15 index of the target level] - [DI_150/15 index of No. 1]).

[Table 2]

Table 2

| Level | Blended coal | | | | | | | Moisture (mass%) | Bulk density [kg/m$^3$] (d.b.) | ΔDI | Classification | Notes |
|---|---|---|---|---|---|---|---|---|---|---|---|---|
| | Carbonaceous material A | | | Carbonaceous material B | | | | | | | | |
| | Type | Ratio of 3 mm or more (mass%) | Ratio of 0.5 mm or more (mass%) | Type | Volatile content (mass%) | Ratio of 125 μm or less (mass%) | Blending ratio in blended coal (mass%) | | | | | |
| 1 | Blended coal | 20 | 65 | - | - | - | 0 | 7 | 775 | 0.0 | Conventional Example | Bulk density of Level 3 in Table 1 |
| 2 | Blended coal | 20 | 65 | Cedar heat-treated at 300 °C | 37.2 | 100 | 2 | 7 | 798 | 0.5 | Example | Bulk density of Level 8 in Table 1 |
| 3 | Blended coal | 20 | 65 | Cedar heat-treated at 500 °C | 22.7 | 100 | 1 | 7 | 792 | 0.5 | Example | Bulk density of Level 9 in Table 1 |
| 4 | Blended coal | 20 | 65 | Cedar heat-treated at 500 °C | 22.7 | 100 | 2 | 7 | 804 | 0.9 | Example | Bulk density of Level 10 in Table 1 |
| 5 | Blended coal | 20 | 65 | Cedar heat-treated at 500 °C | 22.7 | 100 | 3 | 7 | 812 | 1.2 | Example | Bulk density of Level 11 in Table 1 |
| 6 | Blended coal | 20 | 65 | Cedar heat-treated at 500 °C | 22.7 | 90 | 3 | 7 | 811 | 1.0 | Example | Bulk density of Level 12 in Table 1 |

(continued)

| Level | Blended coal | | | | | | | Moisture (mass%) | Bulk density [kg/m³] (d.b.) | ΔDI | Classification | Notes |
|---|---|---|---|---|---|---|---|---|---|---|---|---|
| | Carbonaceous material A | | | Carbonaceous material B | | | | | | | | |
| | Type | Ratio of 3 mm or more (mass%) | Ratio of 0.5 mm or more (mass%) | Type | Volatile content (mass%) | Ratio of 125 μm or less (mass%) | Blending ratio in blended coal (mass%) | | | | | |
| 7 | Blended coal | 20 | 65 | Cedar heat-treated at 500 °C | 22.7 | 77 | 3 | 7 | 807 | 0.7 | Example | Bulk density of Level 13 in Table 1 |
| 8 | Blended coal | 20 | 65 | Cedar heat-treated at 500 °C | 22.7 | 55 | 3 | 7 | 805 | 0.5 | Example | Bulk density of Level 14 in Table 1 |
| 9 | Blended coal | 20 | 65 | Cedar heat-treated at 500 °C | 22.7 | 100 | 5 | 7 | 796 | 0.6 | Example | Bulk density of Level 15 in Table 1 |
| 10 | Blended coal | 20 | 65 | Cedar heat-treated at 500 °C | 22.7 | 100 | 9 | 7 | 786 | 0.3 | Example | Bulk density of Level 16 in Table 1 |
| 11 | Blended coal | 20 | 65 | Cedar heat-treated at 700 °C | 7.4 | 100 | 2 | 7 | 806 | 0.8 | Example | Bulk density of Level 17 in Table 1 |
| 12 | Blended coal | 20 | 65 | Cedar heat-treated at 800 °C | 4.3 | 100 | 2 | 7 | 807 | 0.7 | Example | Bulk density of Level 18 in Table 1 |
| 13 | Blended coal | 20 | 65 | Cedar heat-treated at 900 °C | 1.2 | 100 | 2 | 7 | 810 | 0.1 | Example | Bulk density of Level 19 in Table 1 |

| Level | Blended coal | | | | | | | Moisture (mass%) | Bulk density [kg/m³] (d.b.) | ΔDI | Classification | Notes |
|---|---|---|---|---|---|---|---|---|---|---|---|---|
| | Carbonaceous material A | | | Carbonaceous material B | | | | | | | | |
| | Type | Ratio of 3 mm or more (mass%) | Ratio of 0.5 mm or more (mass%) | Type | Volatile content (mass%) | Ratio of 125 μm or less (mass%) | Blending ratio in blended coal (mass%) | | | | | |
| 14 | Blended coal | 20 | 65 | PKS heat-treated at 300 °C | 44.7 | 90 | 2 | 7 | 794 | 0.5 | Example | Bulk density of Level 20 in Table 1 |
| 15 | Blended coal | 20 | 65 | PKS heat-treated at 500 °C | 19.8 | 90 | 2 | 7 | 800 | 1.0 | Example | Bulk density of Level 21 in Table 1 |
| 16 | Blended coal | 20 | 65 | PKS heat-treated at 700 °C | 6.1 | 90 | 2 | 7 | 808 | 1.0 | Example | Bulk density of Level 22 in Table 1 |
| 17 | Blended coal | 20 | 65 | PKS heat-treated at 850 °C | 2.8 | 90 | 2 | 7 | 809 | 0.5 | Example | Bulk density of Level 23 in Table 1 |
| 18 | Blended coal | 20 | 65 | PKS heat-treated at 900 °C | 1.4 | 90 | 2 | 7 | 812 | 0.2 | Example | Bulk density of Level 24 in Table 1 |
| 19 | Blended coal | 20 | 65 | Cedar heat-treated at 500 °C | 22.7 | 100 | 11 | 7 | 773 | -2.7 | Comparative Example | Bulk density of Level 27 in Table 1 |

In Table 2, Level 1 is a Conventional Example in which the carbonaceous material B is not blended, Levels 2 to 18 are Examples in which the carbonaceous material B is blended, and Level 19 is a Comparative Example in which the blending ratio of carbonaceous material B is outside the range of the present disclosure. The bulk density at each level during carbonization reflects the bulk density measurement results in Table 1. In Levels 2 to 18, which are Examples in which the pulverized carbonaceous material B was blended with the carbonaceous material A and the bulk density was improved, ΔDI exceeded 0, indicating that the blending of the carbonaceous material B had the effect of improving coke strength. On the other hand, at Level 19, for which the blending ratio of carbonaceous material B is outside the range of the present disclosure, ΔDI is less than 0, indicating reduced strength.

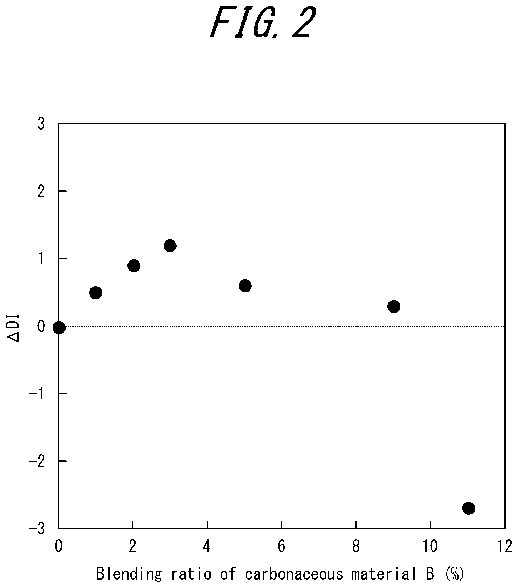

FIG. 2 illustrates the relationship between the blending ratio of the carbonaceous material B and ΔDI for Level 1, to which no carbonaceous material B was added, and Levels 3 to 5, 9, 10, and 19, in which cedar that was heat treated at 500 °C (the ratio of particles of 106 μm or less being 100 mass%) was blended as the carbonaceous material B, among the Examples listed in Table 2. As illustrated in FIG. 2, when the blending ratio of the carbonaceous material B is in the range of 1 mass% or more and 10 mass% or less, the bulk density is improved, and ΔDI exceeds 0.

INDUSTRIAL APPLICABILITY

According to the present disclosure, a technique is provided for producing coke that has high strength even when using biomass-derived raw materials, the technique not requiring any operations posing a risk of ignition.

REFERENCE SIGNS LIST

1    Bulk density measuring device
2    Hopper
3    Guide
4    Container
5    Slide gate

## Claims

1. A method of producing coke by charging blended coal into a coke oven and carbonizing the blended coal, the method comprising:
   preparing the blended coal by blending 1 mass% or more and 10 mass% or less of a carbonaceous material B, which is obtained by heat treating biomass having a ratio of particles with a particle size of 125 μm or less of 50 mass% or more, with a carbonaceous material A, which has a ratio of particles with a particle size of 3 mm or more of 10 mass% or more and 30 mass% or less, and a ratio of particles with a particle size of 0.5 mm or more of 60 mass% or more.

2. The method of producing coke according to claim 1, wherein a volatile content of the carbonaceous material B is 2 mass% or more and 50 mass% or less.

# FIG. 1

150mmΦ

2000mm

200mm

250mm

# FIG. 2

## INTERNATIONAL SEARCH REPORT

| International application No. |
|---|
| **PCT/JP2024/034003** |

**A. CLASSIFICATION OF SUBJECT MATTER**

*C10B 57/04*(2006.01)i; *C10B 53/02*(2006.01)i
FI:   C10B57/04; C10B53/02

According to International Patent Classification (IPC) or to both national classification and IPC

**B. FIELDS SEARCHED**

Minimum documentation searched (classification system followed by classification symbols)

C10B57/04; C10B53/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2014-214268 A (NIPPON STEEL & SUMITOMO METAL CORPORATION) 17 November 2014 (2014-11-17)<br>  claims, example 1 | 1-2 |
| Y | JP 4-106193 A (MITSUBISHI KASEI CORP.) 08 April 1992 (1992-04-08)<br>  claims, examples, fig. 2 | 1-2 |
| A | JP 2004-307683 A (KANSAI COKE AND CHEMICALS CO., LTD.) 04 November 2004 (2004-11-04) | 1-2 |
| A | JP 2005-272569 A (NIPPON STEEL CORPORATION) 06 October 2005 (2005-10-06) | 1-2 |
| A | JP 2014-77086 A (NIPPON STEEL & SUMITOMO METAL CORPORATION) 01 May 2014 (2014-05-01) | 1-2 |
| A | CN 113174272 A (XUZHOU COLLEGE OF INDUSTRIAL TECHNOLOGY) 27 July 2021 (2021-07-27) | 1-2 |

☐ Further documents are listed in the continuation of Box C.       ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
|  | Telephone No. |

Form PCT/ISA/210 (second sheet) (July 2022)

**INTERNATIONAL SEARCH REPORT**
Information on patent family members

International application No.

**PCT/JP2024/034003**

| Patent document cited in search report | | | Publication date (day/month/year) | Patent family member(s) | Publication date (day/month/year) |
|---|---|---|---|---|---|
| JP | 2014-214268 | A | 17 November 2014 | (Family: none) | |
| JP | 4-106193 | A | 08 April 1992 | (Family: none) | |
| JP | 2004-307683 | A | 04 November 2004 | (Family: none) | |
| JP | 2005-272569 | A | 06 October 2005 | (Family: none) | |
| JP | 2014-77086 | A | 01 May 2014 | (Family: none) | |
| CN | 113174272 | A | 27 July 2021 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010077332 A

- JP 2013107930 A

**Non-patent literature cited in the description**

- Handbook of Iron and Steel, vol. II, 170

- Handbook of Iron and Steel, vol. 1, 107